# EUROPÄISCHE PATENTANMELDUNG

(11) **EP 1 887 301 A1**
(43) Veröffentlichungstag der Anmeldung: **13.02.2008**
(21) Anmeldenummer: 06022226.2
(22) Anmeldetag: 24.10.2006
(51) Int. Cl.: F25J 3/06, B01D 5/00, B01D 53/00

(54) **Verfahren und Vorrichtung zur Kryokondensation**

(30) Priorität: 04.08.2006 DE 102006036610
(71) Anmelder: Linde Aktiengesellschaft, 80807 München (DE)
(72) Erfinder: Obermeyer, Heinz-Dieter, 85356 Freising (DE)
(74) Vertreter: Gellner, Bernd

(57) **Zusammenfassung**

Die Erfindung betrifft ein Verfahren und eine Vorrichtung zum Reinigen eines Prozessgases (1) durch Kryokondensation in einem Tiefkühler (TK). Erfindungsgemäß wird das Prozessgas, bevor es in den Tiefkühler (TK) geführt wird, in einem Kondensatvorkühler (KVK) in indirektem Wärmeaustausch mit dem in dem Tiefkühler (TK) von dem Prozessgas (1, 2, 3) abgetrennten Kondensat (5) vorgekühlt

## Beschreibung

Die Erfindung betrifft ein Verfahren zum Kühlen und/oder Reinigen eines Prozessgases, wobei das Prozessgas in einem Tiefkühler in indirektem Wärmeaustausch mit einem Kühlmittelstrom gekühlt und teilweise kondensiert wird, wobei das entstehende Kondensat von dem Prozessgasstrom abgetrennt wird. Ferner bezieht sich die Erfindung auf eine Vorrichtung zum Kühlen und/oder Reinigen eines Prozessgases, umfassend einen als indirekten Wärmetauscher ausgeführten Tiefkühler mit einer Prozessgaszuleitung und einer Prozessgasableitung, mit einer Kühlmittelzuleitung und einer Kühlmittelableitung, und mit einem Kondensatabzug.

Bei der Reinigung eines Prozessgases mittels Kryokondensation wird das zu reinigende Prozessgas in einem Wärmetauscher in indirekten Wärmeaustausch mit einem tiefkalten Kühlmittel gebracht, um Verunreinigungen aus dem Prozessgas auszufrieren bzw. auszukondensieren und dieses als Reingas zu gewinnen. Als Kühlmittel wird häufig flüssiger Stickstoff eingesetzt.

In dem Wärmetauscher wird das Prozessgas so weit abgekühlt, dass die unerwünschten Bestandteile als Flüssigkeit auskondensieren. Dieses Kondensat kann dann über einen Kondensatabzug, der üblicherweise an der tiefsten Stelle der durch den Wärmetauscher führenden Passage für das Prozessgas angeordnet ist, abgezogen werden.

Bei den bestehenden Anlagen zur Kryokondensation werden zur Reduzierung des Stickstoffverbrauches der bei dem Wärmeaustausch zwischen dem flüssigen Stickstoff und dem Prozessgas entstehende kalte gasförmige Stickstoff und das kalte Reingas zur Vorkühlung des zu reinigenden Prozessgases eingesetzt. So kann eine Kryokondensationsanlage aus mehreren Wärmetauschern bestehen, die das Prozessgas in Reihe durchströmt.

Beispielsweise erfolgt die Abkühlung des Prozessgasstromes nacheinander in einem Reingasvorkühler, einem Vorkühler und einem Tiefkühler, welche alle als indirekte Wärmetauscher ausgeführt sind. Der Tiefkühler wird dabei mit flüssigem Stickstoff als Kühlmittel beschickt. Der aus dem Tiefkühler abgezogene verdampfte Stickstoff wird anschließend als Kühlmittel im Vorkühler verwendet. Im Reingaskühler wird das aus dem Tiefkühler abgezogene Reingas zur Kühlung des Prozessgasstromes eingesetzt.

Aufgabe vorliegender Erfindung ist es, bei einem Verfahren der eingangs genannten Art den Verbrauch an Kühlmittel weiter abzusenken. Ferner soll eine entsprechende Vorrichtung entwickelt werden.

Diese Aufgabe wird durch ein Verfahren zum Kühlen und/oder Reinigen eines Prozessgases gelöst, wobei das Prozessgas in einem Tiefkühler in indirektem Wärmeaustausch mit einem Kühlmittelstrom gekühlt und teilweise kondensiert wird, wobei das entstehende Kondensat von dem Prozessgasstrom abgetrennt wird, und wobei das Prozessgas, bevor es in den Tiefkühler geführt wird, in einem Kondensatvorkühler in indirektem Wärmeaustausch mit dem Kondensat vorgekühlt wird.

Die erfindungsgemäße Vorrichtung zum Kühlen und/oder Reinigen eines Prozessgases umfasst einen als indirekten Wärmetauscher ausgeführten Tiefkühler mit einer Prozessgaszuleitung und einer Prozessgasableitung, mit einer Kühlmittelzuleitung und einer Kühlmittelableitung, und mit einem Kondensatabzug, und zeichnet sich dadurch aus, dass ein als indirekter Wärmetauscher ausgeführter Kondensatvorkühler mit einer Prozessgaszuleitung und einer Prozessgasableitung und mit einer Kühlmittelzuleitung und einer Kühlmittelableitung vorgesehen ist, wobei sowohl die Prozessgasableitung des Kondensatvorkühlers und die Prozessgaszuleitung des Tiefkühlers als auch der Kondensatabzug des Tiefkühlers und die Kühlmittelzuleitung des Kondensatvorkühlers strömungsseitig verbunden sind.

Das Wesentliche an der Erfindung ist die Einführung eines oder mehrerer zusätzlicher Wärmetauscher in der Kryokondensationsanlage. Bisher wurde das anfallende Kondensat in flüssiger Form entsorgt oder einer Wiederverwertung zugeführt.

Die Idee ist nun, das anfallende kalte Kondensat zur Vorkühlung des Prozessgases in einem Wärmetauscher einzusetzen. Die Vorkühlung kann mit einem oder mehreren Wärmetauschern erfolgen. Das Kondensat wird bei diesem Wärmeaustausch verdampft und fällt als gasförmiges Produkt zur Entsorgung oder Wiederverwertung an.

Im Tiefkühler wird vorzugsweise tiefkalter Stickstoff, besonders bevorzugt in flüssiger Form, als Kühlmittel eingesetzt.

Zur Einsparung von Kühlmittel wird das Prozessgas von Vorteil zunächst in einem Vorkühler vorgekühlt. Das aus dem Tiefkühler austretende Kühlmittel besitzt immer noch eine genügend tiefe Temperatur, um eine Vorkühlung des Prozessgasstromes zu bewirken. Das aus dem Tiefkühler abgezogene Kühlmittel wird daher einem Vorkühler zugeführt, durch den, vorzugsweise im Gegenstrom, das Prozessgas geführt und vorgekühlt wird, bevor es in den Tiefkühler geleitet wird.

Der Vorkühler ist hierzu mit einer Prozessgaszuleitung, einer Prozessgasableitung, einer Kühlmittelzuleitung und einer Kühlmittelableitung ausgeführt, wobei die Prozessgasableitung des Vorkühlers mit der Prozessgaszuleitung des Tiefkühlers und die Kühlmittelableitung des Tiefkühlers mit der Kühlmittelzuleitung des Vorkühlers strömungsseitig verbunden sind.

Der Begriff "strömungsseitig verbunden" ist so zu verstehen, dass ein Fluid von der einen Leitung zu der anderen Leitung bzw. von einem Behälter zu einem anderen Behälter strömen kann. Hierbei ist nicht zwingend eine direkte Verbindung zwischen den beiden Leitungen erforderlich. Es ist durchaus auch im Sinne der Erfindung, zwischen den beiden strömungsseitig verbundenen Leitungen oder Behältern weitere Bauelemente vorzusehen, solange das Fluid diese Bauelemente durchströmen kann. Insbesondere kann zwischen eine erste und eine zweite Leitung, welche untereinander strömungsseitig verbunden sind, ein weiterer Wärmetauscher oder Behälter geschaltet werden, den das Fluid nach Verlassen der ersten Leitung durchströmt, bevor es in die zweite Leitung eintritt.

Der Vorkühler, ebenso wie der Tiefkühler, sind als indirekte Wärmetauscher ausgeführt, das heißt, der jeweilige Kühlmittelstrom und der abzukühlende Prozessgasstrom werden in getrennten Passagen geführt, so dass keine Vermischung zwischen diesen Strömen auftritt. Der Kühlmittelstrom kann daher für andere Zwecke, beispielsweise als Inertisierungsmedium, weiterverwendet werden. Umgekehrt wird der Prozessgasstrom durch das Kühlmittel nicht verunreinigt.

In einer bevorzugten Ausführungsform der Erfindung durchströmt der Prozessgasstrom zuerst den Kondensatvorkühler und dann den Vorkühler, um schließlich im Tiefkühler ganz auf die gewünschte Temperatur abgekühlt zu werden.

Eine weitere Kühlmitteleinsparung wird bevorzugt dadurch erzielt, dass auch das aus dem Tiefkühler abgezogene gereinigte Prozessgas, im Folgenden als Reingas bezeichnet, zur Vorkühlung des ungereinigten Prozessgases herangezogen wird. Im Tiefkühler wird das Prozessgas beispielsweise mit flüssigem Stickstoff gekühlt. Das Reingas verlässt den Tiefkühler daher mit einer entsprechend tiefen Temperatur. Dieses kalte Reingas wird nun in einem ebenfalls als indirektem Wärmetauscher ausgeführten Reingasvorkühler mit dem Prozessgasstrom in Wärmeaustauschkontakt gebracht, um letzteren abzukühlen.

In dieser Variante wird von Vorteil der Prozessgasstrom nacheinander im Kondensatvorkühler, im Reingasvorkühler, im Vorkühler und im Tiefkühler abgekühlt. Der Kühlmittelverbrauch wird auf diese Weise deutlich reduziert. Die Reihenfolge, in der die einzelnen Vorkühler von dem Prozessgasstrom durchströmt werden, kann gegebenenfalls auch geändert werden.

Bereits im Vorkühler und/oder im Reingaskühler, sofern vorhanden, kann ein Teil der in dem Prozessgas vorhandenen Verunreinigungen bzw. Substanzen auskondensieren. Es ist daher günstig, den Vorkühler und/oder den Reingasvorkühler ebenfalls mit einem Kondensatabzug zu versehen, um aus dem Prozessgasstrom kondensierte bzw. ausgefrorene Substanzen abziehen zu können.

Von Vorteil wird das aus dem Reingasvorkühler und/oder dem Vorkühler gewonnene Kondensat ebenfalls in dem Kondensatvorkühler als Kühlmittel eingesetzt. Es ist aber ebenso möglich, separate Wärmetauscher vorzusehen, in denen das Kondensat aus dem Vorkühler und/oder dem Reingasvorkühler in indirekten Wärmeaustausch mit dem Prozessgasstrom gebracht wird.

Die Erfindung ist in petrochemischen Anlagen von besonderer Bedeutung. Hier fallen häufig Abgasströme an, die einer Verbrennung zugeführt werden. Durch den Anstieg der Rohstoffkosten ist es von besonderem Interesse möglichst wenig Rohstoffe einer thermischen Verwertung zuzuführen, sondern sie in den Produktionsprozess zurückzuführen. Diese Abgasströme werden daher mit Vorteil auf die erfindungsgemäße Weise gereinigt, wobei die in dem Abgas enthaltenen Rohstoffe als verdampftes Kondensat wiedergewonnen werden.

Ein weiterer Vorteil beim Einsatz der Erfindung in derartigen Anlagen ist, dass in den meisten Produktionsanlagen gasförmiger Stickstoff benötigt wird. Der aus der Kryokondensation austretende Stickstoff ist in keiner Weise verunreinigt und kann in bestehende Stickstoffnetze eingespeist werden. Dies gestaltet das Verfahren in doppelter Hinsicht sehr wirtschaftlich. In einem konkreten Einzelfall konnten dadurch Einsparungen von flüssigem Stickstoff von über 30% errechnet werden.

Bei der Weiterverarbeitung von Ethylen fallen Purgeströme an, die einen hohen Ethylenanteil besitzen. Der Marktpreis des Ethylens ist ca. 4-mal so hoch wie die Kosten für den zur erfindungsgemäßen Kondensation benötigten Stickstoff. Da der Stickstoff nochmals verwendet werden kann, ist das Verfahren auch hier sehr attraktiv.

Die Erfindung verbessert die Wirtschaftlichkeit der bestehenden Kryokondensationsverfahren deutlich, so dass neue Anwendungen, insbesondere in der Petrochemie, erschlossen werden können. Vor allem für größere Volumenströme kann die Kryokondensation in Konkurrenz zu anderen Verfahren, insbesondere Adsorptions- und Membranverfahren, treten.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: eine erfindungsgemäße Kryokondensationsanlage und
- Figur 2: eine alternative Ausführung der erfindungsgemäßen Anlage.

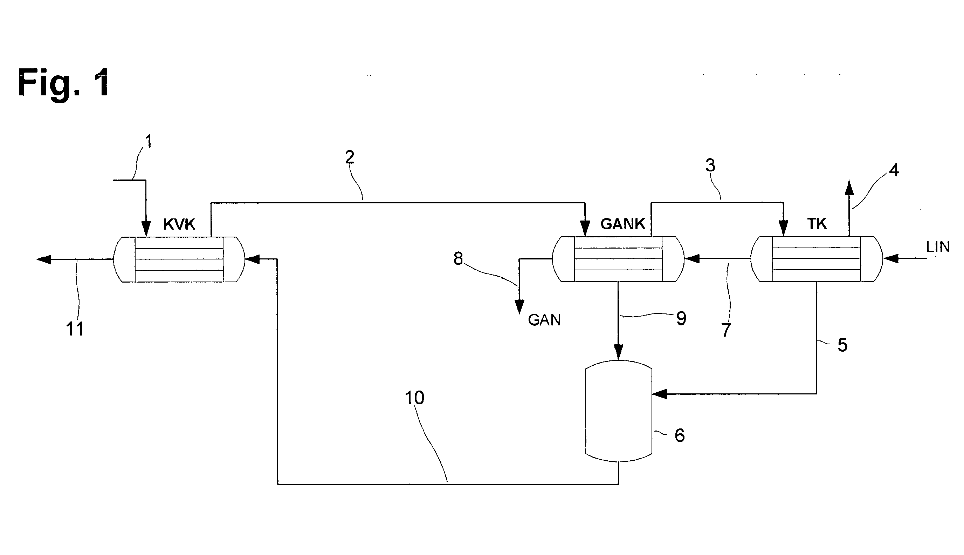

In Figur 1 ist eine erfindungsgemäße Kryokondensationsanlage schematisch dargestellt. Ein zu reinigender Prozessgasstrom 1 wird einem Vorkühler KVK, im Folgenden als Kondensatvorkühler bezeichnet, zugeführt. Der Prozessgasstrom 1 enthält leicht flüchtige oder dampfförmige Substanzen, die aus dem Prozessgasstrom entfernt werden sollen. Bei diesen Substanzen kann es sich um Verunreinigungen oder auch um werthaltige Rohstoffe handeln, die weiterverarbeitet werden sollen. In dem Kondensatvorkühler KVK wird der Prozessgasstrom 1 abgekühlt und verlässt den Kondensatvorkühler KVK mit einer tieferen Temperatur als vorgekühlter Strom 2.

Der vorgekühlte Prozessgasstrom 2 wird anschließend in einem Vorkühler GANK, im Folgenden als Stickstoffvorkühler bezeichnet, weiter abgekühlt. Der hieraus resultierende kalte Prozessgasstrom 3 wird schließlich in einem Tiefkühler TK auf die gewünschte niedrige Zieltemperatur gebracht. Der Prozessgasstrom verlässt den Tiefkühler TK dann als Reingasstrom 4.

Alle Wärmetauscher, das heißt der Kondensatvorkühler KVK, der Stickstoffvorkühler GANK sowie der Tiefkühler TK, sind als indirekte Wärmetauscher ausgeführt, das heißt die Wärmetauscher besitzen getrennte Passagen für den zu kühlenden Prozessgasstrom und den als Kühlmittel eingesetzten Stickstoff bzw. das als Kühlmittel verwendete kalte Kondensat.

Als Kühlmittel wird in dem Tiefkühler TK flüssiger Stickstoff LIN eingesetzt. Der flüssige Stickstoff LIN durchströmt den Tiefkühler entgegen der Strömungsrichtung des Prozessgasstromes 3 und kühlt diesen soweit ab, dass alle in dem Prozessgasstrom 3 unerwünschten Substanzen verflüssigt werden. Das entstehende Kondensat wird aus dem Tiefkühler TK über einen Kondensatabzug 5 aus den Wärmetauscherpassagen für den Prozessgasstrom 3 abgezogen und einem Kondensatbehälter 6 zugeführt.

Im Tiefkühler TK wird der flüssige Stickstoff im Wärmeaustausch mit dem Prozessgasstrom 3 verdampft. Der entstehende gasförmige Stickstoff 7 wird in den Stickstoffvorkühler GANK als Kühlmittel eingeleitet und nach Verlassen des Stickstoffvorkühlers GANK einer weiteren Verwertung, beispielsweise zur Inertisierung, zugeführt.

Auch im Stickstoffvorkühler GANK kann - je nach Siedepunkt - ein Teil der in dem Prozessgasstrom 2 befindlichen Substanzen auskondensieren. Aus diesem Grund ist auch der Stickstoffvorkühler GANK mit einem Kondensatabzug 9 versehen, der in dem Stickstoffvorkühler GANK entstehendes Kondensat in den Kondensatbehälter 6 leitet.

Das in dem Kondensatbehälter 6 zusammengeführte Kondensat 10 wird in den Kondensatvorkühler KVK geleitet und als Kälteträger verwendet. Im Wärmeaustausch mit dem warmen Prozessgas 1 verdampft das Kondensat wieder und kann als gasförmiger Wertstoff 11 einer weiteren Verwertung zugeführt oder auch nur entsorgt werden.

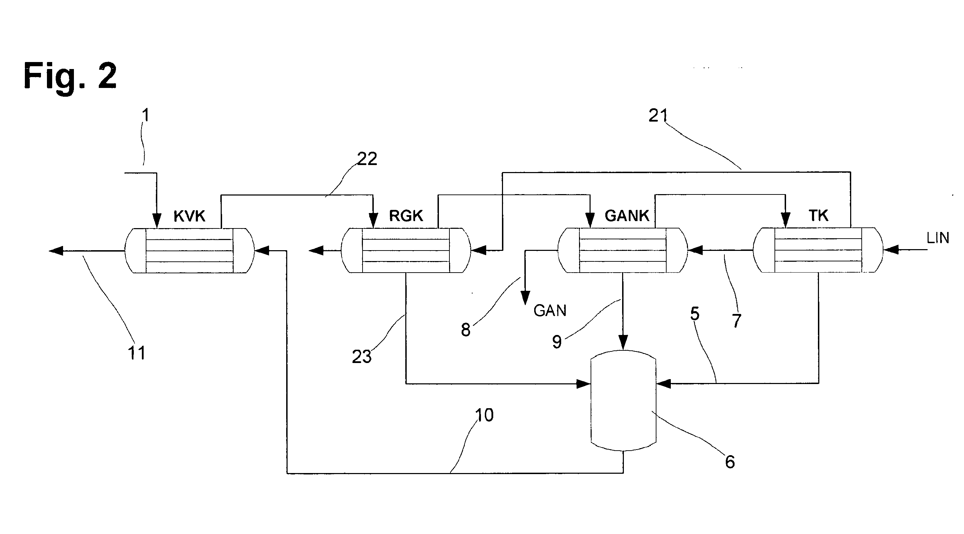

Figur 2 zeigt eine alternative Ausführung der Erfindung mit einem zusätzlichen Reingasvorkühler RGK, der eine weitere Einsparung an Stickstoff bringt. Der Prozessgasstrom 1 wird nacheinander in den Kondensatvorkühler KVK, den Reingasvorkühler RGK, den Stickstoffvorkühler GANK und den Tiefkühler TK geleitet. Die Abkühlung des Prozessgases in dem Kondensatvorkühler KVK, dem Stickstoffvorkühler GANK und dem Tiefkühler TK erfolgt genauso, wie bei dem Verfahren gemäß Figur 1.

Im Unterschied zu dem in Figur 1 dargestellten Verfahren wird die Kälte des in dem Tiefkühler TK erzeugten Reingases 21 auch zur Vorkühlung des Prozessgases 1 genutzt. Hierzu wird das kalte Reingas 21 in dem Reingasvorkühler RGK im Gegenstrom zu dem den Kondensatvorkühler KVK verlassenden Prozessgasstrom 22 geführt. Auch der Reingasvorkühler RGK ist mit einem Kondensatabzug 23 versehen, um im Reingasvorkühler RGK entstehendes Kondensat abzuziehen und in den Kondensatbehälter 6 zu leiten.

Die Vorkühlung in dem Kondensatvorkühler KVK kann dabei über die Menge an Kondensat, welches von dem Kondensatbehälter 6 in den Kondensatvorkühler KVK geleitet wird, eingestellt oder geregelt werden.

## Patentansprüche

1. Verfahren zum Kühlen und/oder Reinigen eines Prozessgases, wobei das Prozessgas (1) in einem Tiefkühler (TK) in indirektem Wärmeaustausch mit einem Kühlmittelstrom (LIN) gekühlt und teilweise kondensiert wird, wobei das entstehende Kondensat (5) von dem Prozessgasstrom (1, 2, 3) abgetrennt wird, **dadurch gekennzeichnet, dass** das Prozessgas (1), bevor es in den Tiefkühler (TK) geführt wird, in einem Kondensatvorkühler (KVK) in indirektem Wärmeaustausch mit dem Kondensat (10) vorgekühlt wird.

2. Verfahren nach Anspruch 1, **dadurch gekennzeichnet, dass** das Prozessgas (1), bevor es in den Tiefkühler (TK) geführt wird, in einem Vorkühler (GANK) in indirektem Wärmeaustausch mit dem aus dem Tiefkühler (TK) austretenden Kühlmittelstrom (7) vorgekühlt wird.

3. Verfahren nach Anspruch 1 und 2, **dadurch gekennzeichnet, dass** das Prozessgas (1) zunächst in den Kondensatvorkühler (KVK) und anschließend in den Vorkühler (GANK) geführt wird.

4. Verfahren nach einem der Ansprüche 1 bis 3, **dadurch gekennzeichnet, dass** das Prozessgas (22) in einem Reingasvorkühler (RGK) in indirektem Wärmeaustausch mit dem aus dem Tiefkühler (TK) austretenden Prozessgas (21) vorgekühlt wird.

5. Verfahren nach einem der Ansprüche 1 bis 4, **dadurch gekennzeichnet, dass** in dem Vorkühler (GANK) und/oder in dem Reingasvorkühler (RGK) von dem Prozessgasstrom (22, 2) Kondensat (9, 23) abgetrennt und dem Kondensatvorkühler (KVK) zugeführt wird.

6. Vorrichtung zum Kühlen und/oder Reinigen eines Prozessgases, umfassend einen als indirekten Wärmetauscher ausgeführten Tiefkühler (TK) mit einer Prozessgaszuleitung (3) und einer Prozessgasableitung (4), mit einer Kühlmittelzuleitung (LIN) und einer Kühlmittelableitung (7), und mit einem Kondensatabzug (5), **dadurch gekennzeichnet, dass** ein als indirekter Wärmetauscher ausgeführter Kondensatvorkühler (KVK) mit einer Prozessgaszuleitung (1) und einer Prozessgasableitung (2) und mit einer Kühlmittelzuleitung (10) und einer Kühlmittelableitung (11) vorgesehen ist, wobei sowohl die Prozessgasableitung (2) des Kondensatvorkühlers (KVK) und die Prozessgaszuleitung (3) des Tiefkühlers (TK) als auch der Kondensatabzug (5) des Tiefkühlers (TK) und die Kühlmittelzuleitung (10) des Kondensatvorkühlers (KVK) strömungsseitig verbunden sind.

7. Vorrichtung nach Anspruch 6, **dadurch gekennzeichnet, dass** ein als indirekter Wärmetauscher ausgeführter Vorkühler (GANK) mit einer Prozessgaszuleitung (2), einer Prozessgasableitung (3), einer Kühlmittelzuleitung (7) und einer Kühlmittelableitung (8) vorgesehen ist, wobei die Prozessgasableitung (3) des Vorkühlers (GANK) mit der Prozessgaszuleitung (3) des Tiefkühlers (TK) und die Kühlmittelableitung (7) des Tiefkühlers (TK) mit der Kühlmittelzuleitung (7) des Vorkühlers (GANK) strömungsseitig verbunden sind.

8. Vorrichtung nach einem der Ansprüche 6 oder 7, **dadurch gekennzeichnet, dass** ein als indirekter Wärmetauscher ausgeführter Reingasvorkühler (RGK) mit einer Prozessgaszuleitung (22), einer Prozessgasableitung, einer Reingaszuleitung (21) und einer Reingasableitung vorgesehen ist, wobei die Prozessgasableitung (21) des Tiefkühlers (TK) mit der Reingaszuleitung (21) des Reingasvorkühlers (RGK) und die Prozessgasableitung des Reingasvorkühlers (RGK) mit der Prozessgaszuleitung des Tiefkühlers (TK) und/oder mit der Prozessgaszuleitung des Vorkühlers (GANK) strömungsseitig verbunden ist.

9. Vorrichtung nach einem der Ansprüche 7 und/oder 8, **dadurch gekennzeichnet, dass** der Vorkühler (GANK) und/oder der Reingasvorkühler (RGK) mit einem Kondensatabzug (9, 23) versehen sind, welcher strömungsseitig mit der Kühlmittelzuleitung (10) des Kondensatvorkühlers (KVK) verbunden sind.

## Geänderte Patentansprüche

### Geänderte Patentansprüche gemäss Regel 137(2) EPÜ.

**1.** Verfahren zur Kryokondensation zum Kühlen und/oder Reinigen eines mit leicht siedenden organischen Komponenten verunreinigten Prozessgases, wobei das Prozessgas (1) in einem Tiefkühler (TK) in indirektem Wärmeaustausch mit einem Kühlmittelstrom (LIN) aus Stickstoff gekühlt und teilweise kondensiert wird, wobei das entstehende Kondensat (5) von dem Prozessgasstrom (1, 2, 3) abgetrennt wird, **dadurch gekennzeichnet, dass** das Prozessgas (1), bevor es in den Tiefkühler (TK) geführt wird, in einem Kondensatvorkühler (KVK) in indirektem Wärmeaustausch mit dem Kondensat (10) vorgekühlt wird.

**2.** Verfahren nach Anspruch 1, **dadurch gekennzeichnet, dass** das Prozessgas (1), bevor es in den Tiefkühler (TK) geführt wird, in einem Vorkühler (GANK) in indirektem Wärmeaustausch mit dem aus dem Tiefkühler (TK) austretenden Kühlmittelstrom (7) vorgekühlt wird.

**3.** Verfahren nach Anspruch 1 und 2, **dadurch gekennzeichnet, dass** das Prozessgas (1) zunächst in den Kondensatvorkühler (KVK) und anschließend in den Vorkühler (GANK) geführt wird.

**4.** Verfahren nach einem der Ansprüche 1 bis 3, **dadurch gekennzeichnet, dass** das Prozessgas (22) in einem Reingasvorkühler (RGK) in indirektem Wärmeaustausch mit dem aus dem Tiefkühler (TK) austretenden Prozessgas (21) vorgekühlt wird.

**5.** Verfahren nach einem der Ansprüche 1 bis 4, **dadurch gekennzeichnet, dass** in dem Vorkühler (GANK) und/oder in dem Reingasvorkühler (RGK) von dem Prozessgasstrom (22, 2) Kondensat (9, 23) abgetrennt und dem Kondensatvorkühler (KVK) zugeführt wird.

**6.** Verfahren nach einem der Ansprüche 1 bis 5, **dadurch gekennzeichnet, dass** als Prozessgas ein Abgasstrom und/oder Reinigungsgas in einer petrochemischen Anlage, bevorzugt einer Ethylenanlage, verarbeitet wird, wobei die leicht siedenden Verunreinigungen hauptsächlich aus Ethylen oder ähnlichen Rohstoffen bestehen.

**7.** Kryokondensationsanlage zum Kühlen und/oder Reinigen eines Prozessgases, umfassend einen als indirekten Wärmetauscher ausgeführten Tiefkühler (TK) mit einer Prozessgaszuleitung (3) und einer Prozessgasableitung (4), mit einer Kühlmittelzuleitung (LIN) und einer Kühlmittelableitung (7), und mit einem Kondensatabzug (5), **dadurch gekennzeichnet, dass** ein als indirekter Wärmetauscher ausgeführter Kondensatvorkühler (KVK) mit einer Prozessgaszuleitung (1) und einer Prozessgasableitung (2) und mit einer Kühlmittelzuleitung (10) und einer Kühlmittelableitung (11) vorgesehen ist, wobei sowohl die Prozessgasableitung (2) des Kondensatvorkühlers (KVK) und die Prozessgaszuleitung (3) des Tiefkühlers (TK) als auch der Kondensatabzug (5) des Tiefkühlers (TK) und die Kühlmittelzuleitung (10) des Kondensatvorkühlers (KVK) strömungsseitig verbunden sind.

**8.** Kryokondensationsanlage nach Anspruch 7, **dadurch gekennzeichnet, dass** ein als indirekter Wärmetauscher ausgeführter Vorkühler (GANK) mit einer Prozessgaszuleitung (2), einer Prozessgasableitung (3), einer Kühlmittelzuleitung (7) und einer Kühlmittelableitung (8) vorgesehen ist, wobei die Prozessgasableitung (3) des Vorkühlers (GANK) mit der Prozessgaszuleitung (3) des Tiefkühlers (TK) und die Kühlmittelableitung (7) des Tiefkühlers (TK) mit der Kühlmittelzuleitung (7) des Vorkühlers (GANK) strömungsseitig verbunden sind.

**9.** Kryokondensationsanlage nach einem der Ansprüche 7 oder 8, **dadurch gekennzeichnet, dass** ein als indirekter Wärmetauscher ausgeführter Reingasvorkühler (RGK) mit einer Prozessgaszuleitung (22), einer Prozessgasableitung, einer Reingaszuleitung (21) und einer Reingasableitung vorgesehen ist, wobei die Prozessgasableitung (21) des Tiefkühlers (TK) mit der Reingaszuleitung (21) des Reingasvorkühlers (RGK) und die Prozessgasableitung des Reingasvorkühlers (RGK) mit der Prozessgaszuleitung des Tiefkühlers (TK) und/oder mit der Prozessgaszuleitung des Vorkühlers (GANK) strömungsseitig verbunden ist.

**10.** Kryokondensationsanlage nach einem der Ansprüche 8 und/oder 9, **dadurch gekennzeichnet, dass** der Vorkühler (GANK) und/oder der Reingasvorkühler (RGK) mit einem Kondensatabzug (9, 23) versehen sind, welcher strömungsseitig mit der Kühlmittelzuleitung (10) des Kondensatvorkühlers (KVK) verbunden sind.
